# EUROPÄISCHE PATENTANMELDUNG

(11) **EP 1 319 628 A1**
(43) Veröffentlichungstag der Anmeldung: **18.06.2003**
(21) Anmeldenummer: 02028255.4
(22) Anmeldetag: 16.12.2002
(51) Int. Cl.: B66C 1/66

(54) **Entleerung von Grossbehältern**

(30) Priorität: 14.12.2001 DE 10162070
(71) Anmelder: Hüffermann Fahrzeugtechnik GmbH, 27793 Wildeshausen (DE)
(72) Erfinder: Stach, Lothar, 27793 Wildeshausen (DE); Woyczechowski, Ralf, 21224 Rosengarten (DE)
(74) Vertreter: Engelmann, Kristiana

(57) **Zusammenfassung**

Eine Vorrichtung (40) zur Entleerung von im wesentlichen quaderförmigen Großbehältern (1), insbesondere Behältern für gepreßt zu entsorgende Reststoffe oder Wertstoffe, wird so ausgebildet, daß die Vorrichtung eine Trageinheit (45) zum Anheben und Verlagern zumindest eines Behälters (1) und eine Schwenkeinheit (51) zum Ausleeren des oder der angehobenen Behälter(s) (1) umfaßt (Fig. 1).

## Beschreibung

Die Erfindung betrifft eine Vorrichtung zur Entleerung von Großbehältern, insbesondere Behältern für zu entsorgende Reststoffe oder Wertstoffe, nach dem Oberbegriff des Anspruchs 1 und nach dem Oberbegriff des Anspruchs 13 sowie einen Behälter nach dem Oberbegriff des Anspruchs 16.

Bei der Entsorgung von Hausmüll, Industriemüll, Reststoffen, die eine Wertstoffsortieranlage durchlaufen haben, Schlacken oder ähnlichen Zuschlagstoffen, ist zunehmend der Trend feststellbar, diese in möglichst große Entsorgungszentren, beispielsweise Verbrennungsanlagen, einzubringen. Damit geht das Erfordernis einher, die Behälter industrialisiert zu entleeren, wodurch etwa bei in das Entsorgungszentrum einfahrenden Güterzügen mit die genannten Stoffe aufnehmenden Behältern eine kurze Standzeit erreicht werden soll. Zudem sollen mehrere Güterzüge gleichzeitig entleert werden können.

Es ist des weiteren wünschenswert, die Behälter auch bei einem Rücktransport nicht leer zu lassen, sondern zur Effizienzsteigerung grundsätzlich Leerfahrten weitgehend zu vermeiden.

Bei der Behälterentleerung stellt sich insbesondere das Problem, daß der Inhalt bei niedrigen Außentemperaturen vielfach festgefroren ist und deswegen sich einer schnellen Entleerung aus dem Behälter widersetzt. Dies zeigt sich insbesondere, wenn etwa durch rückwärtige, einem Durchtritt für einen Preßstempel gegenüberliegende Wandungsbereiche der Inhalt ausgeschoben werden soll. Versuche mit einer Ausschubhilfe derart, daß durch die hierfür geöffnete Durchtrittsöffnung für den Preßstempel ein Ausschubstempel eingeschoben wird, haben gezeigt, daß dieses Verfahren zum einen sehr aufwendig ist und zum anderen nicht den gesamten Inhalt ausschiebt, sondern häufig lediglich einen Ausstanzvorgang eines Anteils mit den Erstreckungsmaßen des Ausschubstempels bewirkt.

Der Erfindung liegt das Problem zugrunde, die Behälterentleerung im Hinblick auf die o.g. Probleme zu optimieren.

Die Erfindung löst dieses Problem durch eine Vorrichtung mit den Merkmalen des Anspruchs 1 und einen Behälter mit den Merkmalen des Anspruchs 13 sowie einen Behälter mit den Merkmalen des Anspruchs 16. Vorteilhafte Ausgestaltungen der Erfindung ergeben sich aus den Ansprüchen 2 bis 12, 14 und 15 sowie 17 bis 24.

Mit der erfindungsgemäßen Vorrichtung können die Anlieferungsstelle des zugeführten Behälters und seine Entleerungsstelle räumlich voneinander getrennt sein. Es ist nicht erforderlich, daß der Behälter während seines Entleerens auf dem Transportfahrzeug, etwa einem Waggon, verbleibt. Die Behälter können etwa zu einer zentralen Entleerungsstelle transportiert werden, ohne daß über die gesamte Länge etwa eines Zuges eine Aufnahme für die zu entsorgenden Güter vorhanden sein müßte.

Dadurch, daß die Schwenkeinheit integraler Bestandteil der Vorrichtung ist und mit der Trageinheit verbunden ist, braucht zum Ausleeren des Behälters dieser nicht abgesetzt zu werden, so daß ein zusätzlicher Verfahrensschritt, etwa das Aufsetzen des Behälters auf eine verkippbare Rampe oder dergleichen, entbehrlich ist.

Insbesondere ist es vorteilhaft, wenn die Trageinheit einen Tragrahmen umfaßt, der mit dem jeweils anzuhebenden Behälter im oberen Randbereich verbindbar ist und dadurch ein stabiles haltendes Element ausbildet, das - anders als Ketten oder dergleichen - eine jederzeit kontrollierte Bewegung des aufgenommenen Behälters ermöglicht. Insbesondere ist es damit auch möglich, daß der Tragrahmen - und mit ihm der aufgenommene Behälter - von der Schwenkreinrichtung umwendbar ist, wodurch eine Über-Kopf-Lage des zu entleerenden Behälters ermöglicht werden kann.

Für von Hause aus oberseitig verschließbare Behälter ergibt sich eine besonders effektive Entleerung, wenn die Vorrichtung eine Öffnungseinheit zur Abnahme und Halterung eines Behälterdeckels umfaßt. Dann ist es möglich, daß, ohne eine vorherige Deckelöffnung vorzunehmen, durch die anhebende Vorrichtung auch der Behälterdeckel geöffnet wird.

Besonders günstig kann der dann gehaltene Deckel entweder nach oben abgezogen werden, oder der Behälter wird abgesenkt unter dem gehaltenen Deckel und anschließend in die Über-Kopf-Lage gewendet, um seine Entleerung zu bewirken.

Die Vorrichtung kann insgesamt an einer Laufkatze angeordnet sein, die unterschiedlich positionierbar ist, so daß eine Vielzahl von hinter- und nebeneinander angeordneten Waggons von der Vorrichtung erreicht werden kann.

Der erfindungsgemäße Behälter gestattet in angehobener Stellung, in der die Tragaufnahmen belegt sind, die Öffnung bzw. das Abheben des Deckels. Dabei ist es sowohl möglich, daß der Deckel lediglich aufschwenkbar ist, als auch, daß er vollständig abnehmbar ist.

Besonders vorteilhaft sind beide Optionen an einem einzigen Behälter realisierbar.

Besonders günstig ist es des weiteren, wenn die Aufschwenkrichtung eines schwenkbaren Deckels variiert werden kann, wofür etwa je nach Bedarf einsetzbare Bolzen auf der einen oder der anderen Seite vorgesehen werden können.

Insbesondere bei gefrorenem Inhalt ist eine Entleerung des Behälters dann noch möglich, wenn zumindest im unteren Bereich die Seitenwandungen konisch zulaufen.

Weitere Vorteile und Einzelheiten ergeben sich aus einem nachfolgend beschriebenen und in der Zeichnung dargestellten Ausführungsbeispiel des Gegenstandes der Erfindung. In der Zeichnung zeigt:
- Fig. 1: einen Preßbehälter mit einer Vorrichtung zu dessen Entleerung in perspektivischer Ansicht,
- Fig. 2: die Vorrichtung bei Positionierung oberhalb eines aufzunehmenden Behälters,
- Fig. 3: die Vorrichtung und den Behälter in Verbindungsstellung,
- Fig. 4: eine ähnliche Ansicht wie Fig. 3 nach Öffnen des Behälterdeckels und Absenkung des Behälters relativ gegenüber dem gehaltenen Deckel,
- Fig. 5: eine ähnliche Ansicht wie Fig. 4 bei Seitwärtsverschwenken des Behälters,
- Fig. 6: eine ähnliche Ansicht wie Fig. 5 bei Verschwenken des Behälters in eine Über-Kopf-Lage,
- Fig. 7: einen erfindungsgemäßen Behälter in perspektivischer Gesamtansicht,
- Fig. 8: den Behälter nach Fig. 7 bei einseitig aufgeschwenktem Deckel,
- Fig. 9: das Detail IX in Fig. 7,
- Fig. 10: einen Schnitt entlang der Ebene X-X in Fig. 7,
- Fig. 11: einen Schnitt entlang der Ebene XI-XI in Fig. 7,
- Fig. 12: eine Detailansicht eines stirnseitigen Frontportals des Behälters sowie eines weiteren, als Adapter wirkenden und an dieses anmontierbaren Frontportals, wobei an dem stirnseitigen Frontportal des Behälters Befestigungsbeschläge als Corner fittings angeordnet sind,
- Fig. 12a: eine ähnliche Ansicht wie Fig. 12 bei Anordnung der Corner fittings an dem anmontierbaren Frontportal,
- Fig. 12b: eine ähnliche Ansicht wie Fig. 12 bei Anmontage der Corner fittings sowohl am Grundportal als auch am anhängbaren Frontportal,
- Fig. 12c: eine ähnliche Ansicht wie Fig. 12 mit Befestigungsbeschlägen im oberen und unteren Bereich des behälterseitigen Portals zur Verbindung mit einem seitlich angreifenden Tragrahmen,
- Fig. 12d: eine ähnliche Ansicht wie Fig. 12b eines über seitliche Schwenkscharniere einhängbaren und um eine vertikale Achse in die Schließstellung einschwenkbaren Frontportals,
- Fig. 13: eine ähnliche Ansicht wie Fig. 12 während der Anmontage des Frontportals,
- Fig. 13a: eine ähnliche Ansicht wie Fig. 12a während der Anmontage des Frontportals,
- Fig. 13b: eine ähnliche Ansicht wie Fig. 12b während der Anmontage des Frontportals,
- Fig. 13c: eine ähnliche Ansicht wie Fig. 12c während der Anmontage des Frontportals,
- Fig. 14: eine ähnliche Ansicht wie Fig. 13 nach Einschwenken des vorgesetzten Portals zur Erreichung einer Parallellage zu dem stirnseitigen Endportal des Behälters,
- Fig. 14a: eine ähnliche Ansicht wie Fig. 13a nach Einschwenken des vorgesetzten Portals zur Erreichung einer Parallellage zu dem stirnseitigen Endportal des Behälters,
- Fig. 14b: eine ähnliche Ansicht wie Fig. 13b nach Einschwenken des vorgesetzten Portals zur Erreichung einer Parallellage zu dem stirnseitigen Endportal des Behälters,
- Fig. 14c: eine ähnliche Ansicht wie Fig. 13c nach Einschwenken des vorgesetzten Portals zur Erreichung einer Parallellage zu dem stirnseitigen Endportal des Behälters,
- Fig. 14d: eine ähnliche Ansicht wie Fig. 13d nach Einschwenken des vorgesetzten Portals zur Erreichung einer Parallellage zu dem stirnseitigen Endportal des Behälters, wobei in Abweichung zu Fig. 13d Befestigungsbeschläge hier nur analog zu dem Beispiel in Fig. 14 an dem behälterseitigen Portal angeordnet sind,
- Fig. 14e: eine ähnliche Ansicht wie Fig. 14a bei Anmontage eines von oben parallel zur Stirnseite des Behälters abwärts verlagerbaren Frontportals,
- Fig. 15: eine ähnliche Ansicht wie Fig. 14 nach vollständigem Festlegen des anmontierten Portals,
- Fig. 15a: eine ähnliche Ansicht wie Fig. 14a nach vollständigem Festlegen des anmontierten Portals,
- Fig. 15b: eine ähnliche Ansicht wie Fig. 14b nach vollständigem Festlegen des anmontierten Portals,
- Fig. 15c: eine ähnliche Ansicht wie Fig. 14c nach vollständigem Festlegen des anmontierten Portals,
- Fig. 16: eine ähnliche Ansicht wie Fig. 15 von schräg unten,
- Fig. 16a: eine ähnliche Ansicht wie Fig. 15a von schräg unten,
- Fig. 16b: eine ähnliche Ansicht wie Fig. 15b von schräg unten,
- Fig. 16c: eine ähnliche Ansicht wie Fig. 15c von schräg unten,
- Fig. 17: die Teile nach Fig. 14 in schnittbildlicher Ansicht etwa entlang der Linie XVII-XVII in Fig. 16,
- Fig. 17a: die Teile nach Fig. 14a in schnittbildlicher Ansicht etwa entlang der Linie XVIIa-XVIIa in Fig. 16a,
- Fig. 17b: die Teile nach Fig. 14b in schnittbildlicher Ansicht etwa entlang der Linie XVIIb-XVIIb in Fig. 16b,
- Fig. 18: eine Detailansicht der Aufnahmeelemente für das vorgehängte Portal,
- Fig. 18a: eine Detailansicht der Aufnahmeelemente für das vorgehängte Portal in Ausbildung nach Fig. 17a,
- Fig. 18b: eine Detailansicht der Aufnahmeelemente für das vorgehängte Portal in Ausbildung nach Fig. 17b,
- Fig. 19: eine Detailansicht der Verbindung zweier im unteren Bereich angeordneter Widerlager,
- Fig. 20: einen Schnitt entlang der Linie XX-XX in Fig. 19,
- Fig. 21: eine Detailansicht der seitlichen Aufnahmen zur Verbindung des Behälterportals und des vorgesetzten Portals,
- Fig. 22: eine alternative Ausführungsform eines Behälters, der seitlich mit Eckbeschlägen zum Angreifen eines Tragmittels versehen ist,
- Fig. 23: eine stirnseitige Ansicht des Behälters nach Fig. 22 in angehobener Stellung durch einen angreifenden Tragrahmen,
- Fig. 24: den Behälter nach Fig. 23 in der angehobenen Stellung in perspektivischer Ansicht,
- Fig. 25: eine ähnliche Ansicht wie Fig. 24 nach einer Drehung des Behälters um 90°,
- Fig. 26: eine ähnliche Ansicht wie Fig. 25 nach einer Drehung des Behälters um weitere 90° bei durch Gewichtskraft aufgeschwenktem Deckel,
- Fig. 27: den schematisch dargestellten Ablauf des Entleerens des Behälters in einer entsprechenden Vorrichtung,
- Fig. 28: eine Entleerungsvorrichtung, die an einer Laufkatze angeordnet ist, zur Behälterentleerung in einer schematischen Gesamtansicht,
- Fig. 29: eine Einzelteilansicht eines Deckels mit einem starren Rahmen und einem darauf gehaltenen flexiblen Anteil,
- Fig. 30: eine ähnliche Ansicht wie Fig. 29 bei Abheben des flexiblen Anteils in einem Eckbereich,
- Fig. 31: eine schematische Seitenansicht eines Behälter mit vorgesetztem Frontportal und einem ersten Typ einer Hecktür,
- Fig. 32: eine ähnliche Ansicht wie Fig. 31 eines Behälters ohne vorgesetztes Frontportal und mit einem zweiten Typ einer Hecktür.

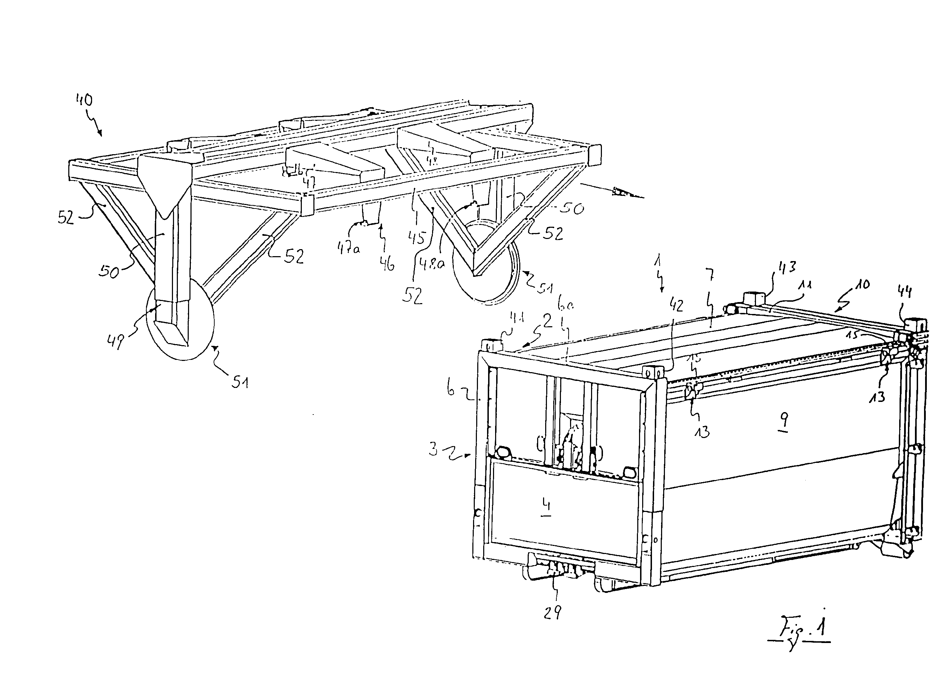

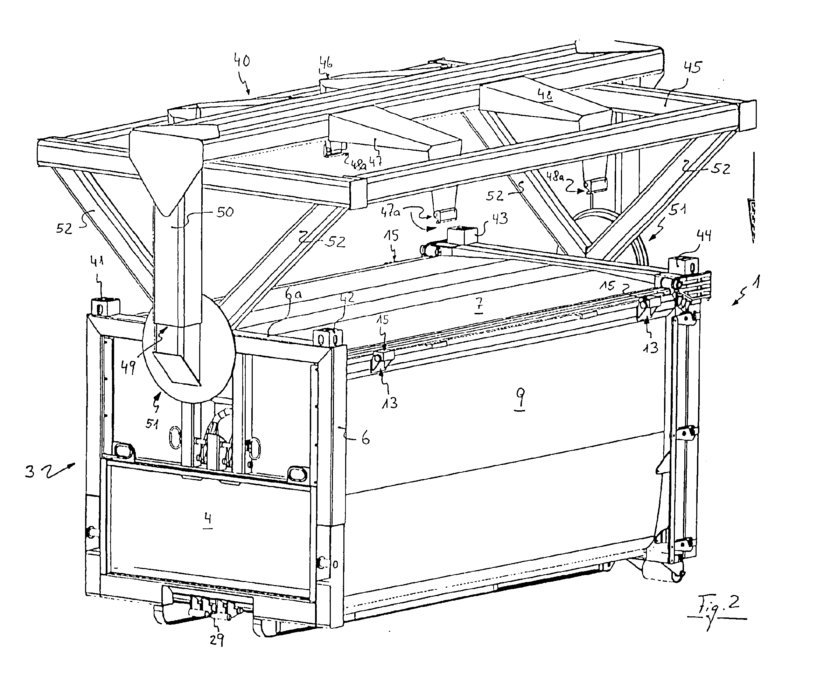

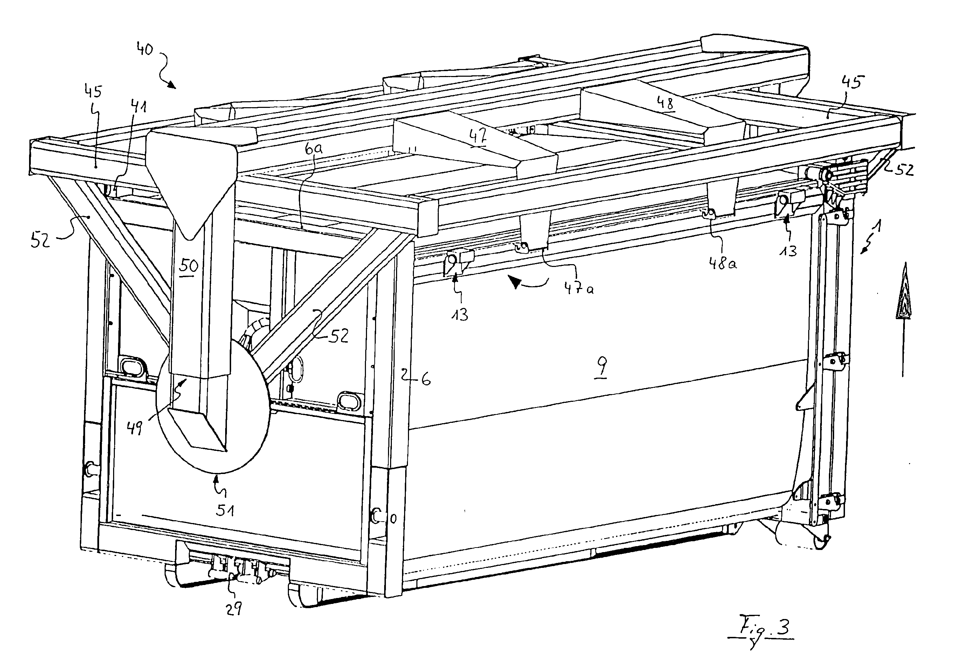

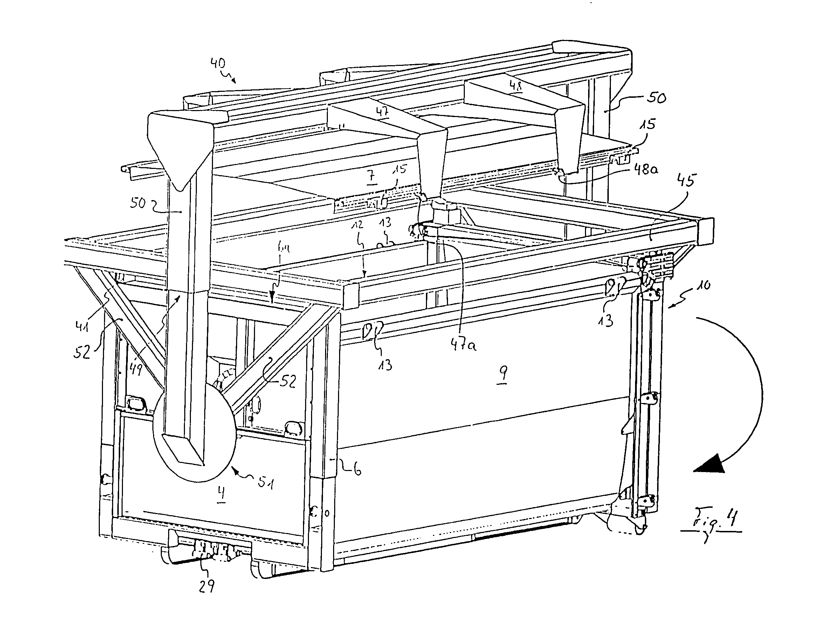

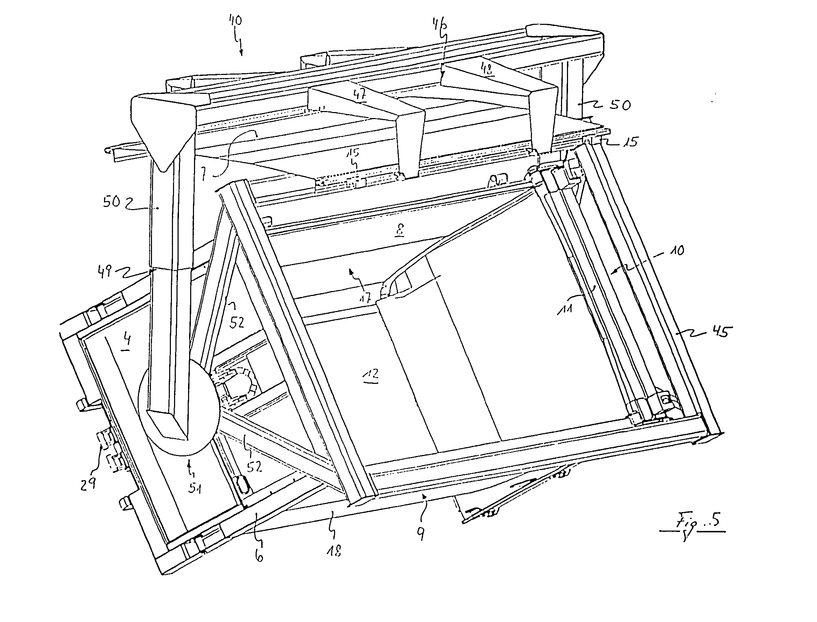

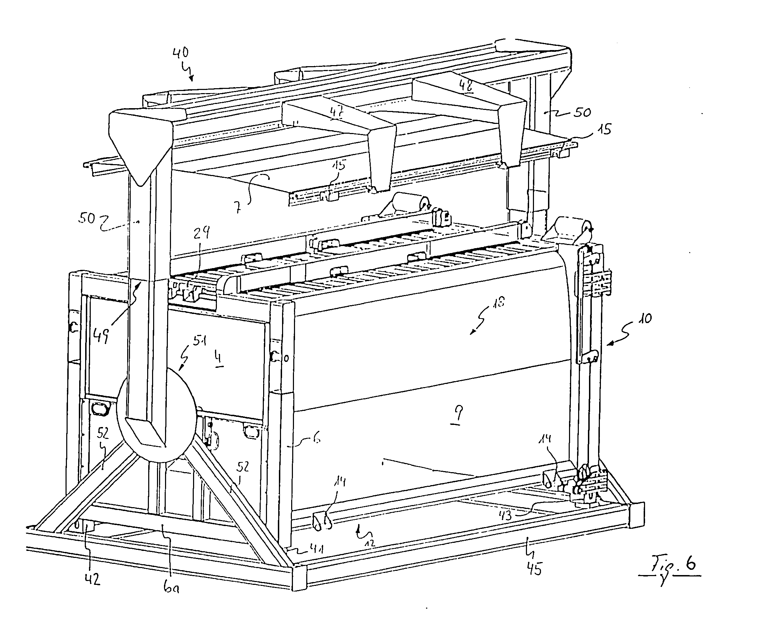

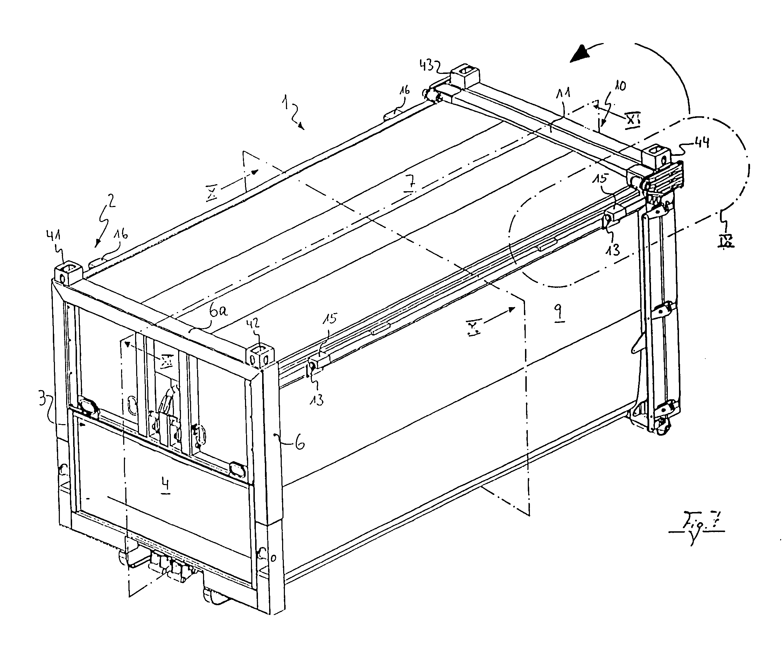

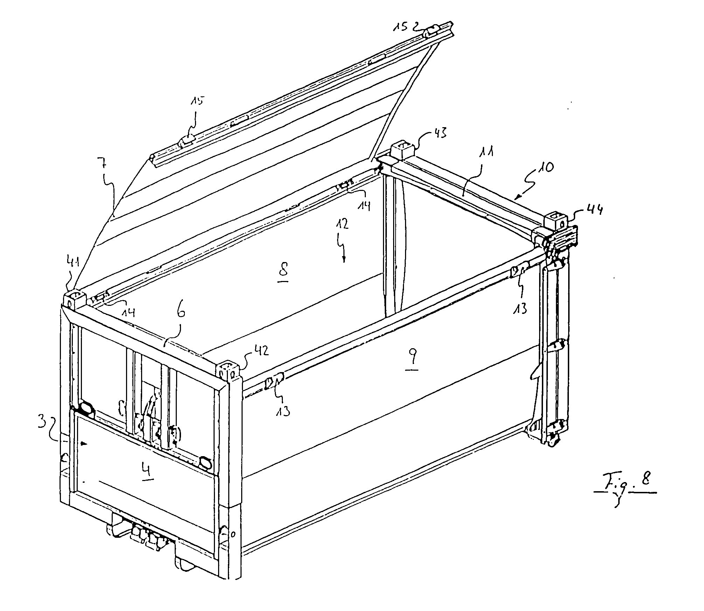

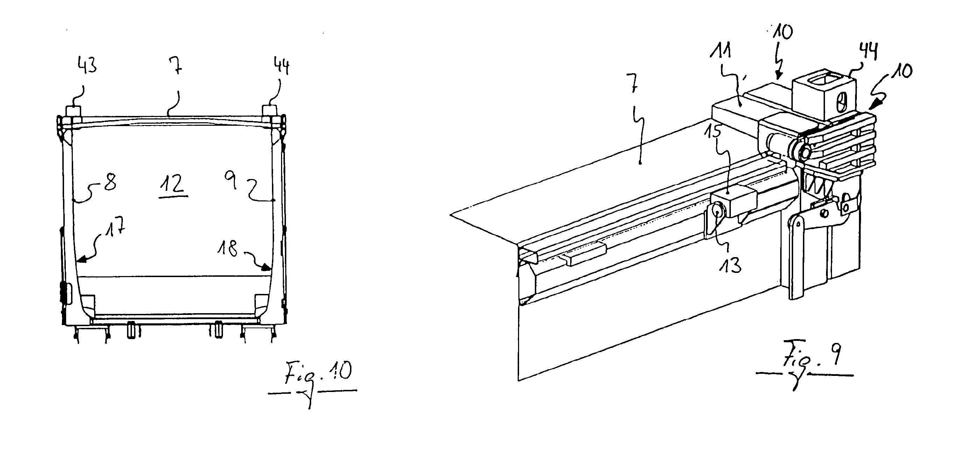

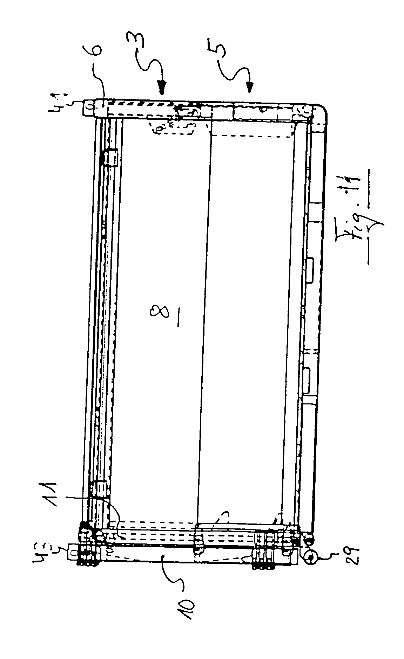

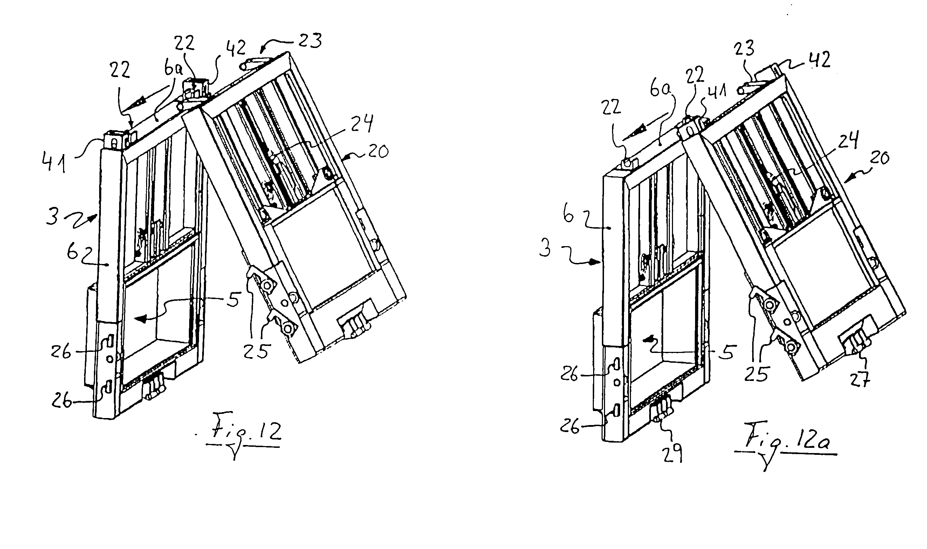

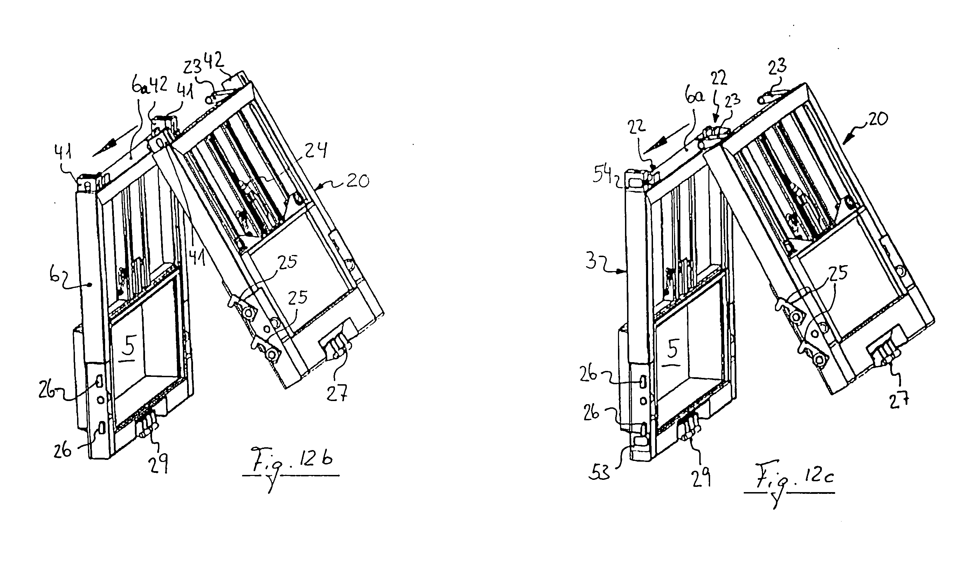

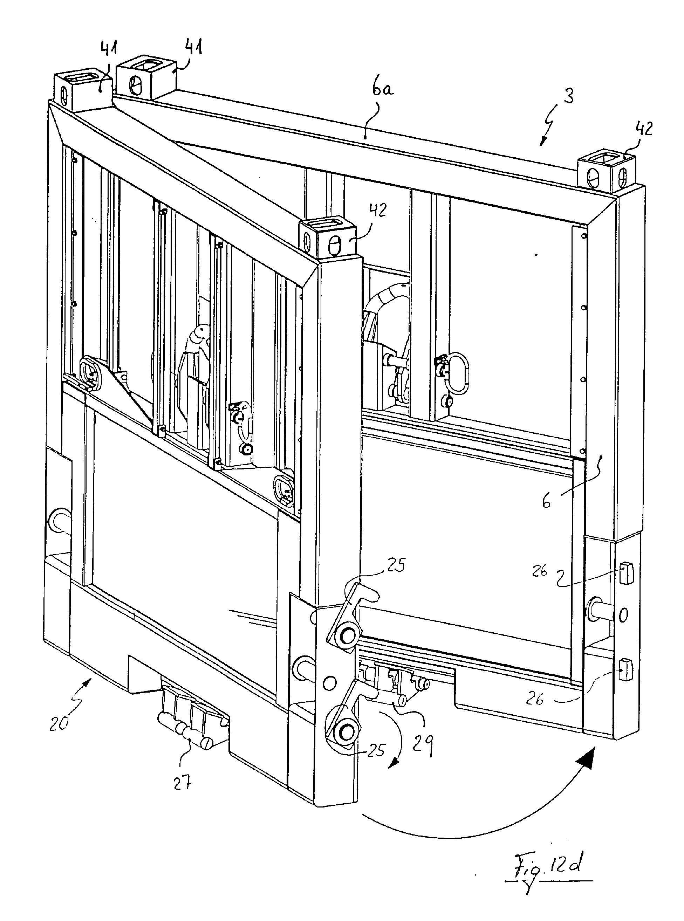

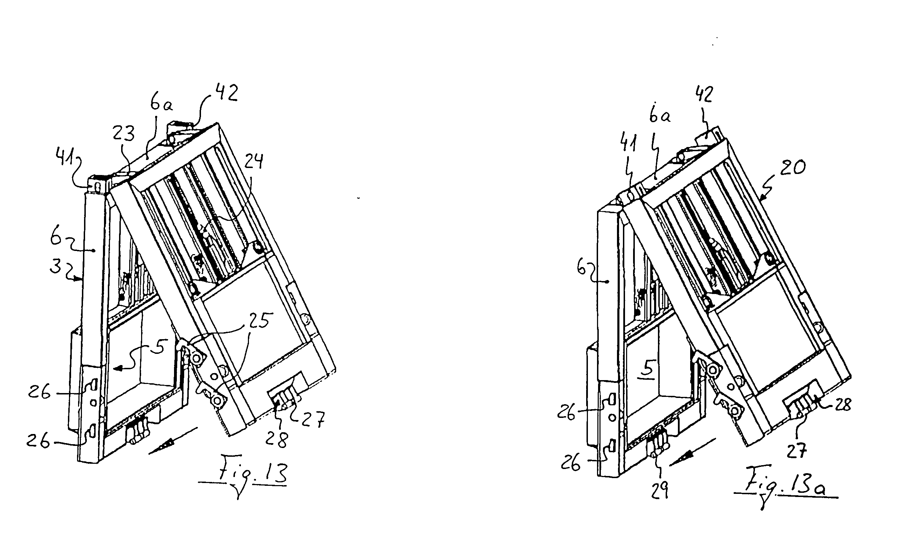

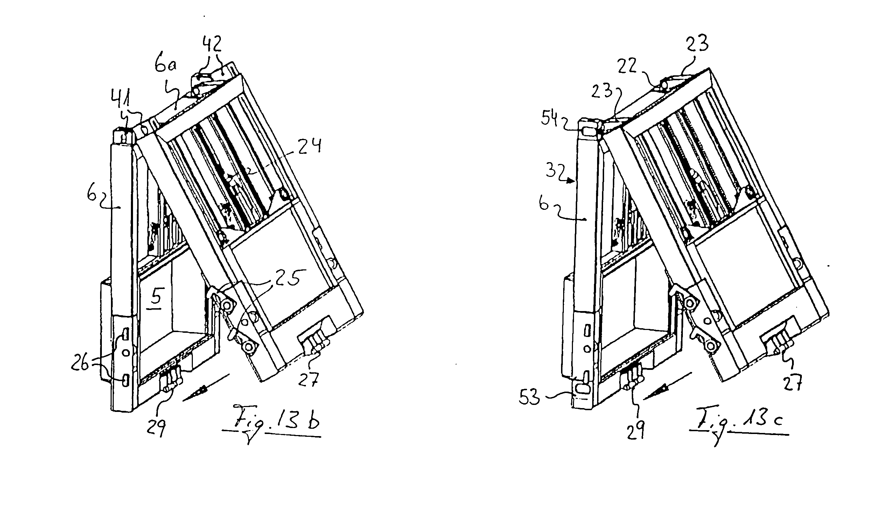

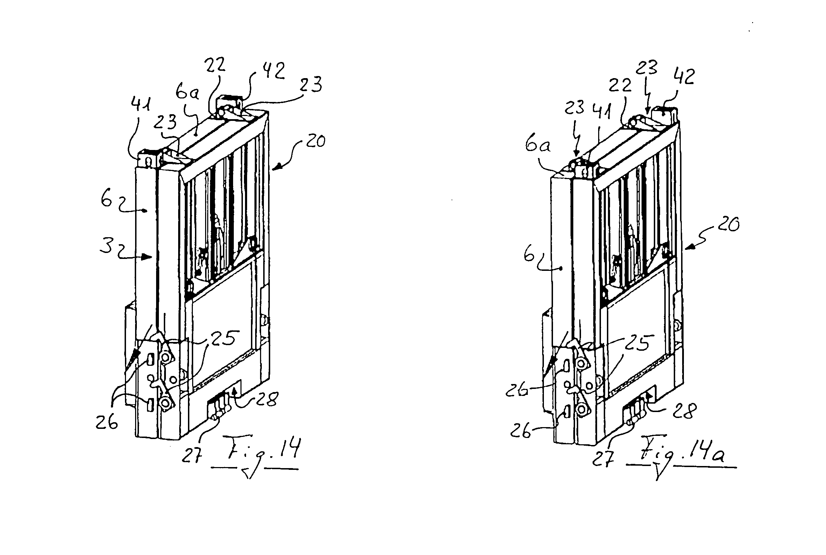

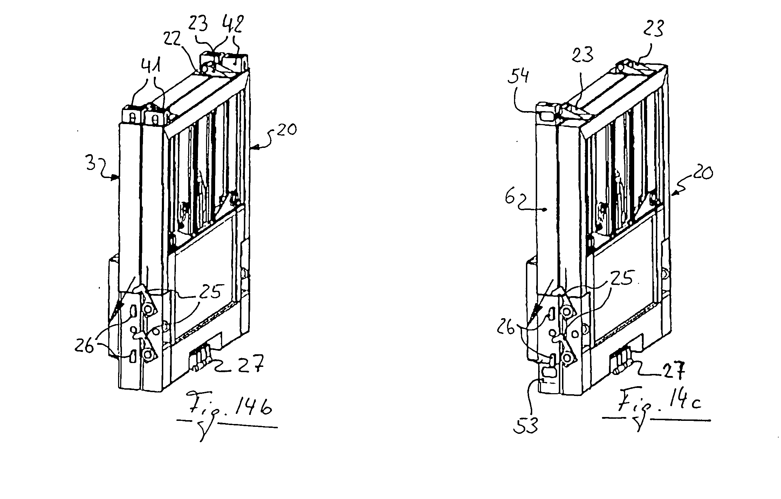

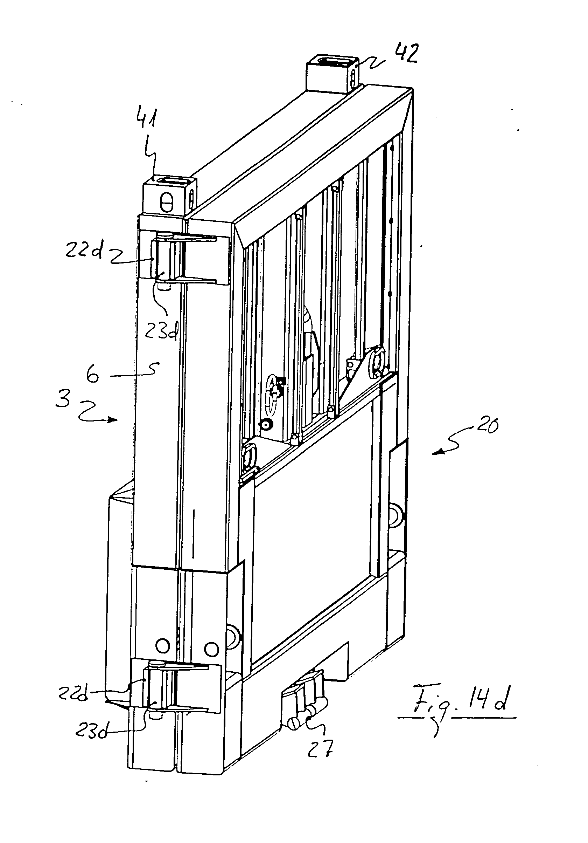

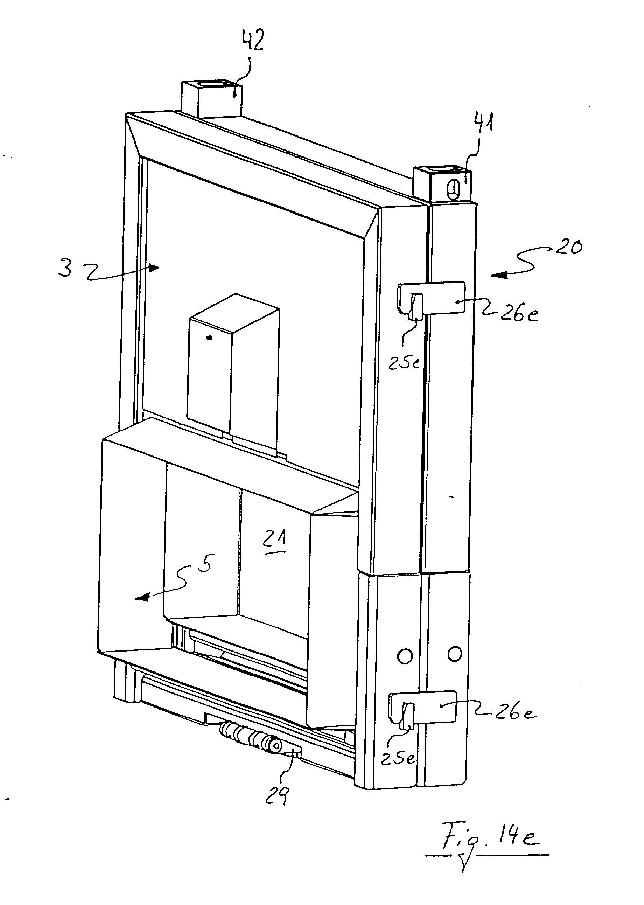

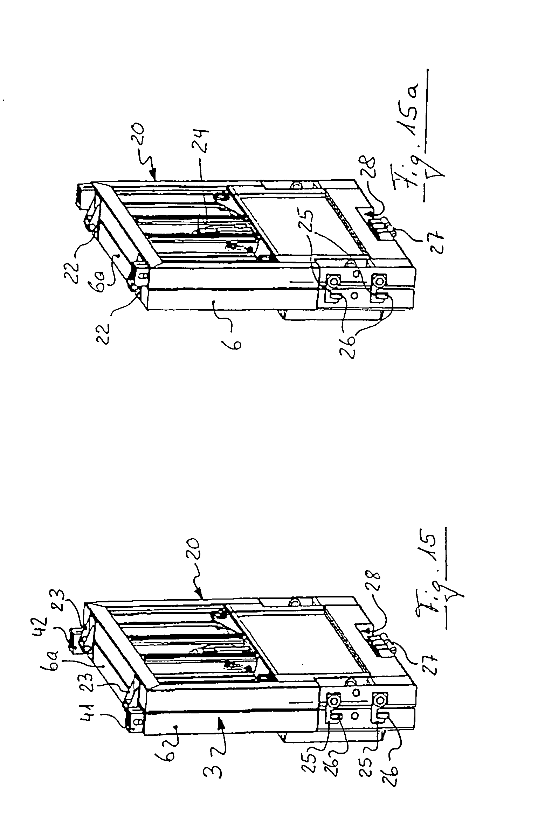

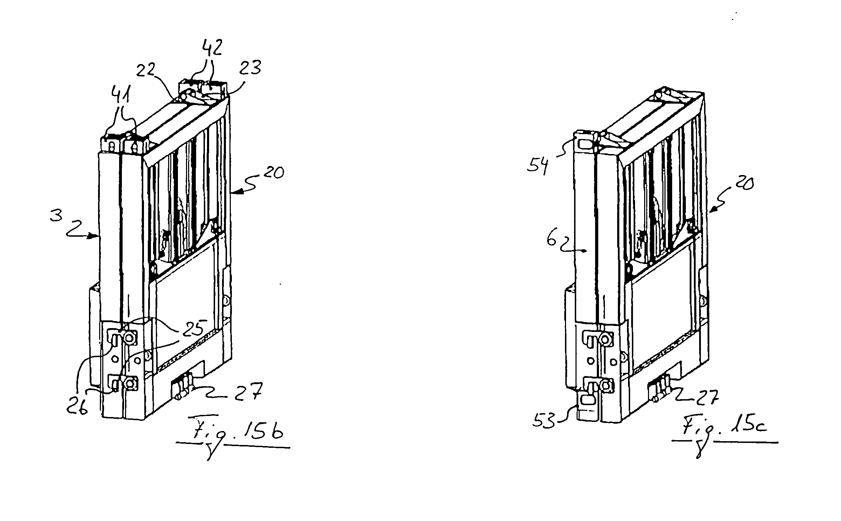

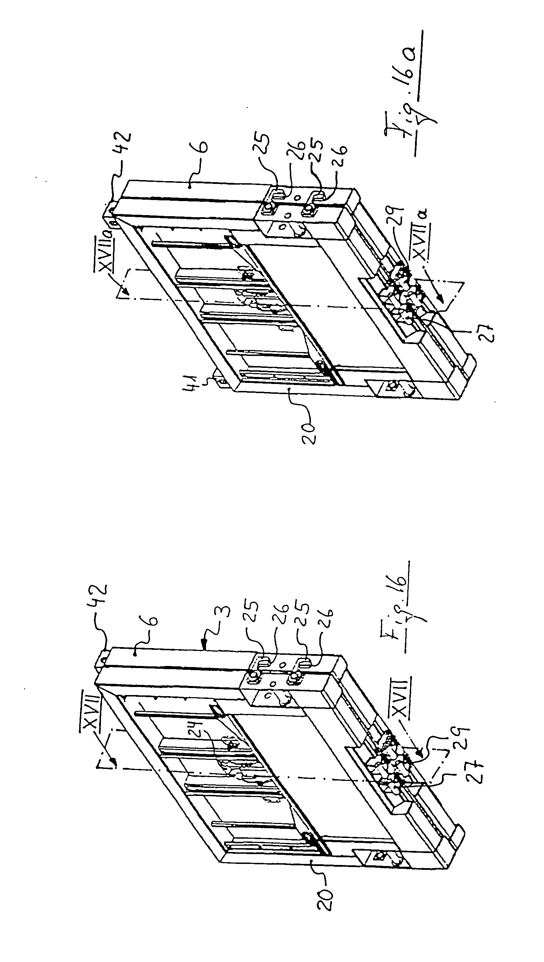

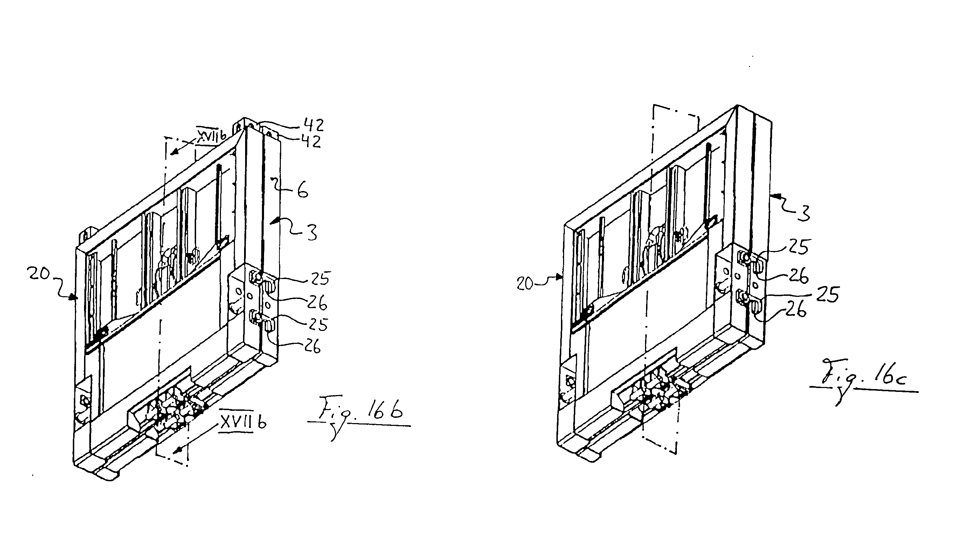

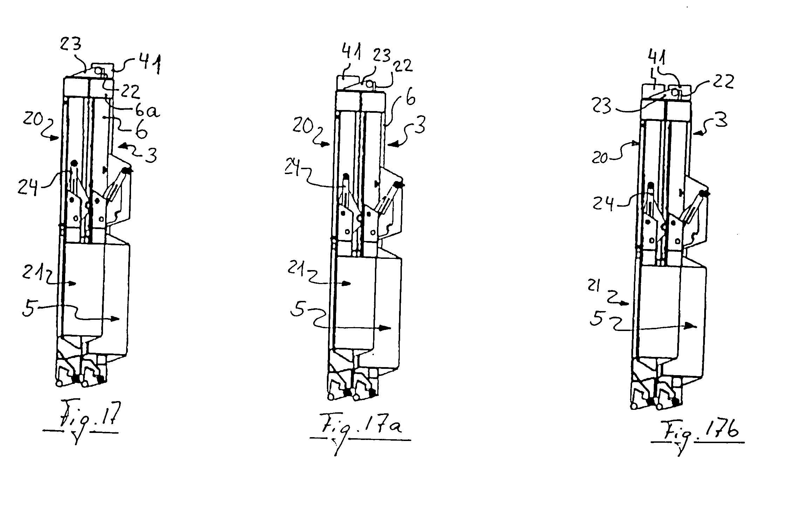

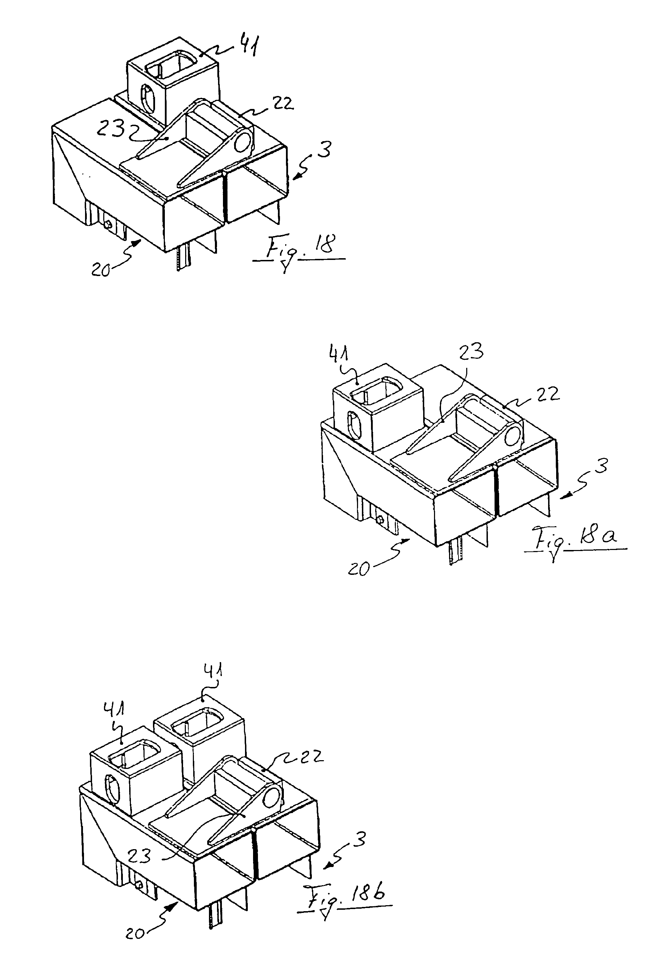

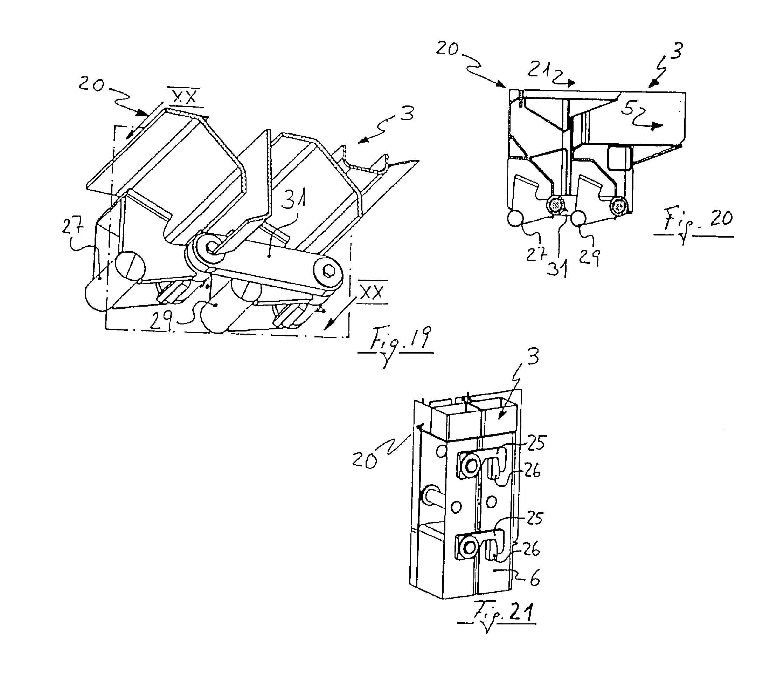

Der in Fig. 1 gezeigte Behälter 1 hat eine im wesentlichen quaderförmige Gestalt und weist an einer Stirnseite 2 ein Portal 3 auf, das eine über ein Verschlußglied 4 zu öffnende und zu schließende Durchtrittsöffnung 5 umfaßt. Das Portal 3 ist von einem stabilen, umlaufenden Rahmen 6 umgeben. Das Verschlußglied 4 ist dabei guillotinenartig auf- und abwärts verfahrbar, um damit die Durchtrittsöffnung 5 zu öffnen oder zu schließen. Die Durchtrittsöffnung 5 dient dabei herkömmlich als einzige Befüllöffnung für den Behälter. Die Längserstreckung des Behälters 1 beträgt mehrere Meter, beispielsweise etwa fünf Meter. Ein auf maximal gesetzlich erlaubte LKW-Längen abgestimmtes Normmaß ist vorteilhaft. An seiner dem Portal 3 gegenüberliegenden Stirnseite weist der Behälter 1 eine Schwenktür 10 auf, die an einem Rahmen 11 gehalten ist. Die Schwenktür 10 kann vorteilhaft ein Kombischarnier aufweisen, das sowohl ein Schwenken der Tür 10 um eine vertikale, seitlich des Behälterinnenraums 12 gelegene Achse, als auch um eine horizontale, im oberen Randbereich des Behälters 1 liegende Achse ermöglicht.

Weiterhin ist in Fig. 1 eine Vorrichtung 40 zum Anheben und Entleeren eines oder mehrerer Behälter 1 dargestellt.

Um ein Zusammenwirken mit der Vorrichtung 40 zu ermöglichen, weist der Behälter 1 gemäß einem ersten Ausführungsbeispiel in seinen oberen Eckbereichen Eckbeschläge 41,42,43,44 auf, die jeweils dem Portalrahmen 6 bzw. dem gegenüberliegenden Rahmen 11 oder einer rückwärtigen Schwenktür 10 zugeordnet sind- je nach Längenausbildung des Behälters 1. Der Längsabstand zwischen den Eckbeschlägen 41 und 43 bzw. 42 und 44 entspricht ebenso wie der jeweilige Querabstand einer Norm, an die die Erstreckung eines entsprechenden Tragrahmens 45 der Entleerungsvorrichtung 40 angepaßt ist. Die Eckbeschläge 41,42,43,44 entsprechen im gezeigten Ausführungsbeispiel sogenannten Corner fittings, wie sie aus ISO-Normcontainern bekannt sind. Diese sind zum Eingriff von festen, formschlüssig einhakenden Zapfen, die dem als Trageinheit wirkenden Tragrahmen 45 zugeordnet sind, vorgesehen, wodurch der Behälter 1 mit der Tragvorrichtung 40 starr verbunden werden kann, ohne daß ein Schwanken, wie etwa bei einer Halterung mittels einer Kette oder Seilen, möglich wäre.

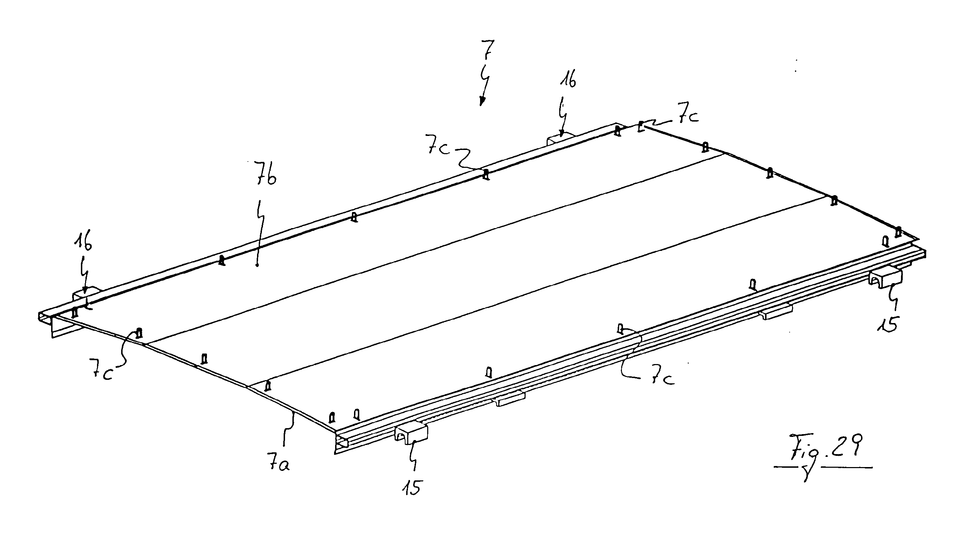

Zur Entleerung werden die Behälter 1, die beispielsweise auf Güterzügen einer Entsorgungsanlage zugeführt werden, von der Vorrichtung 40 derart gegriffen, daß der daran angeordnete Tragrahmen 45 in die Corner fittings 41 bis 44 eingreift und somit die starre, formschlüssige Verbindung zwischen dem Tragrahmen 45 und dem Behälter 1 bewirkt. In dieser Stellung kann der Tragrahmen 45 insgesamt beispielsweise vertikal angehoben werden, um den oder die jeweiligen Behälter 1 von den Waggons zu heben. Dabei ist es möglich, daß mehrere Behälter 1 hintereinander auf einem Waggon oder einem LKW gehalten sind und gleichzeitig von einem entsprechend lang ausgebildeten Tragrahmen 45, der in Anpassung hieran mit einer Vielzahl von Eingriffszapfen in Corner fittings 41,42,43,44 ausgebildet ist, gegriffen werden. Zum Anheben kann der Tragrahmen 45 etwa insgesamt an Seilen gegenüber einem oberen Rahmen 70 (sh. Figur 28) gehalten sein. Der obere Rahmen 70 ist an einer Laufkatze 71 verschieblich abgestützt, wodurch die aufgenommenen Behälter längs und quer bewegt werden können und über etwa parallel stehende Güterzüge hinweggehoben und einer zentralen Entleerstation zugeführt werden können.

Der gezeigte Behälter 1 ist mit einem öffnungsfähigen Deckel 7 versehen, der sich auf Oberkanten von seitlichen Wandungen 8,9 abstützt. Der Deckel 7 erstreckt sich im Ausführungsbeispiel über die gesamte Länge zwischen dem vorderen Portal 3 und einem gegenüber von diesem gelegenen Rahmen 11, an dem eine Tür 10 zum Entleeren des Behälters 1 schwenkbar gehalten ist. Mit der gezeigten Erstreckung des Deckels 7 über die gesamte Länge und Breite des Behälterinnenraums 12 ergibt sich bei geöffnetem Deckel 7 eine besonders große Befüll- oder Entleerungsöffnung. Dies führt zu unten noch näher beschriebenen Vorteilen.

Das Deckelteil 7 ist, da es als Widerlager bei der Pressung von eingebrachtem Befüllgut dient, stabil ausgeführt, beispielsweise ist es längs verrippt und insgesamt in einer leicht bombierten Ausformung ausgebildet. Somit kann trotz des eingebrachten Preßdrucks der Deckel ohne Zwischenabstützung formstabil gehalten sein.

Die Seitenwandungen sind zur schwenkbaren Abstützung des Deckels 7 in ihren oberen Bereichen mit als Schwenkachsen dienenden Abstützungen 13,14 versehen, die von Lagerhalbschalen 15,16 des Deckels 7 in dessen geschlossener Stellung übergriffen sind.

Abweichend von den Darstellungen in den Figuren 1 ff., kann zusätzlich zu dem Übergreifen auch ein die Lagerachsen 13 bzw. 14 umgreifendes Sicherungselement vorgesehen sein, etwa derart, daß die Lagerschalen 15 und 16 vollständig umgreifend ausgebildet sind und beispielsweise die Lagerachsen 13 und 14 als bewegliche Bolzen ausgebildet sind, die in Eingriffsstellung jeweils eine Schwenkachse bilden und nach Herausbewegen aus den Lagerschalen 15,16 eine Öffnung des Deckels 7 ermöglichen. Dann können beispielsweise die zur Seitenwandung 9 gehörenden Bolzen 13 oder die zur Seitenwandung 8 gehörenden Bolzen 14 entfernt werden, um damit den Schwenksinn des Deckels 7 vorgeben zu können. Nach Entfernen der Bolzen 13,14 beider Seiten 8,9 kann dann das Deckelteil 7 insgesamt abgenommen werden.

Es versteht sich, daß als Schwenklagerungen und Sicherungen für den Deckel 7 unterschiedlichste Einrichtungen in Frage kommen.

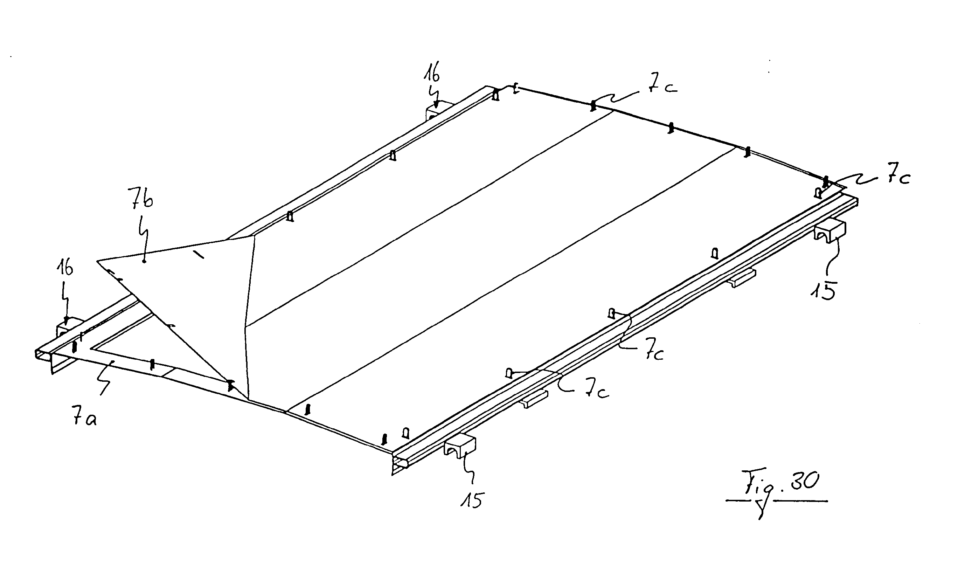

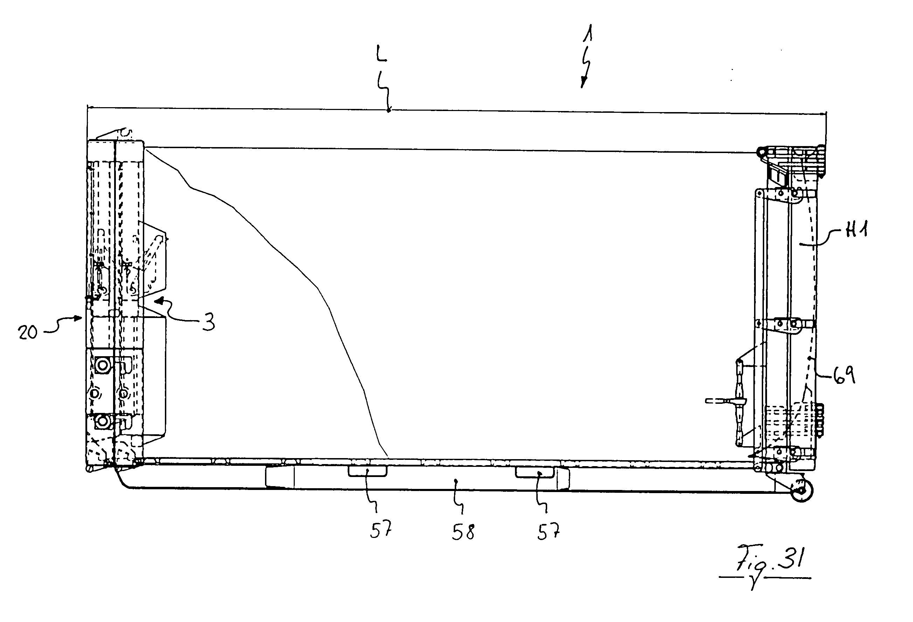

In den Fig. 29 und 30 ist dargestellt, daß der Behälterdeckel 7 auch einen flexiblen Anteil 7b, beispielsweise einen durch Drahtgeflecht ausgesteiften Planenteil, umfassen kann, der randseitig auf einem Rahmen 7a gehalten ist, was nicht zwingend ist, und beispielsweise von Ösen oder dergleichen Befestigungsmitteln 7c durchgriffen ist. Die Ösen können durch Verdrehen eine Sicherung bilden. Auch eine umlaufende Schnur oder dergleichen kann vorgesehen sein. Nach Öffnen der Ösen 7c bzw. der damit verbundenen Befestigungen kann das flexible Teil 7b abgehoben werden, beispielsweise auch aufgerollt oder aufgefaltet werden, um somit eine Befüllung von oben zu ermöglichen, etwa auch durch einleitende Müllschächte von Müllschluckern oder dergleichen.

Zum Anheben und Entleeren des oder der Behälter 1 wird der Tragrahmen 45 über die Corner fittings 41,42,43,44 mit einem oder mehreren Behältern 1 in Eingriff gebracht. Im folgenden ist die Situation für einen Tragrahmen 45, der genau einen Behälter 1 aufnimmt, beschrieben.

Eine Öffnungseinheit 46 der Vorrichtung 40 umfaßt seitlich ausgreifende Arme 47,48, die endseitig mit Schwenkhalterungen 47a,48a versehen sind. Diese Schwenkhalterungen sind zunächst (Fig. 2) vertikal offen gehalten, so daß die Arme 47,48 mit vertikal abwärts weisenden Endbereichen, an denen die Schwenkhalterungen angeordnet sind, seitlich am Deckel des Behälters 1 während des Absenkens des Tragrahmens 45 vorbeigeführt werden können.

Anschließend werden die Zapfen des Tragrahmens 45 in den Corner fittings 41,42,43,44 verriegelt und Schwenkhalterungen 47a,48a einwärts verschwenkt, wozu Antriebe vorgesehen sind (nicht eingezeichnet). Damit werden randseitig ausgreifende Ansätze des Deckels 7 untergriffen, so daß der Deckel 7 eine Abstützung durch die Öffnungseinheit 46 erfährt. Mit dieser Abstützung ist es möglich, daß der Tragrahmen 45 gegenüber der Öffnungseinheit 46 relativbeweglich ist, wobei entweder die Öffnungseinheit 46 gegenüber dem Tragrahmen 45 und dem daran gehaltenen Behälter angehoben wird oder, wie in Fig. 4 dargestellt ist, der Tragrahmen 45 über die Hubeinrichtung 49 gegenüber der Öffnungseinheit 46 abgesenkt wird. Die Hubvorrichtung 49 ist dabei innerhalb einer ersten Stützeinrichtung 50 gehalten, die den oberen, von der Laufkatze 71 oder dem oberen Rahmen 70 gehaltenen Teil der Vorrichtung 40 mit einer Schwenkeinrichtung 51 für den Behälter 1 verbindet (sh. Fig. 28).

Während des in den Fig. 5 und 6 dargestellten Verschwenkens des im Tragrahmen 45 gehaltenen Behälters 1 um eine Längsachse, die den Behälter 1 im Bereich seiner vertikalen Längsmittelebene auf etwa halber Höhe durchdringt, bleibt der Deckel 7 fest in der Öffnungsvorrichtung 46 gehalten.

In dieser Stellung, in der der Behälterinnenraum 12 nach oben hin offen ist, kann somit unter dem gehaltenen Deckel 7 der Behälter 1 frei verschwenkt werden. Hierfür ist die bereits erwähnte Schwenkeinrichtung 51 vorgesehen, die über eine zweite Stützeinheit, hier V-förmig ausgreifende Streben 52, mit dem Tragrahmen 45 verbunden ist.

Über die in Fig. 5 gezeigte Zwischenstellung wird der Behälter 1 in eine vollständige Über-Kopf-Lage nach Fig. 6 verschwenkt.

Um die Entleerung des Behälters 1 zu erleichtern, die durch den geöffneten Deckel 7 in Über-Kopf-Lage des Behälters 1 durchgeführt werden kann, sind zumindest untere Bereiche 17,18 der Seitenwandungen 8,9 konisch verjüngend ausgebildet, so daß sie Abgleitschrägen für das im Behälterinnenraum 12 enthaltene Gut ausbilden. Der Innenraum 12 erweitert sich somit nach oben hin. Auch die Rückwand kann, wie in Fig. 5 zu sehen ist, hierfür schräg nach unten verjüngend ausgebildet sein.

Nach der Entleerung kann der Behälter 1 entweder gleichsinnig weiter verschwenkt oder gegensinnig rückgeschwenkt werden. Vor Aufsetzen des Deckels ist gegebenenfalls auch eine Befüllung mit weiteren Stoffen möglich.

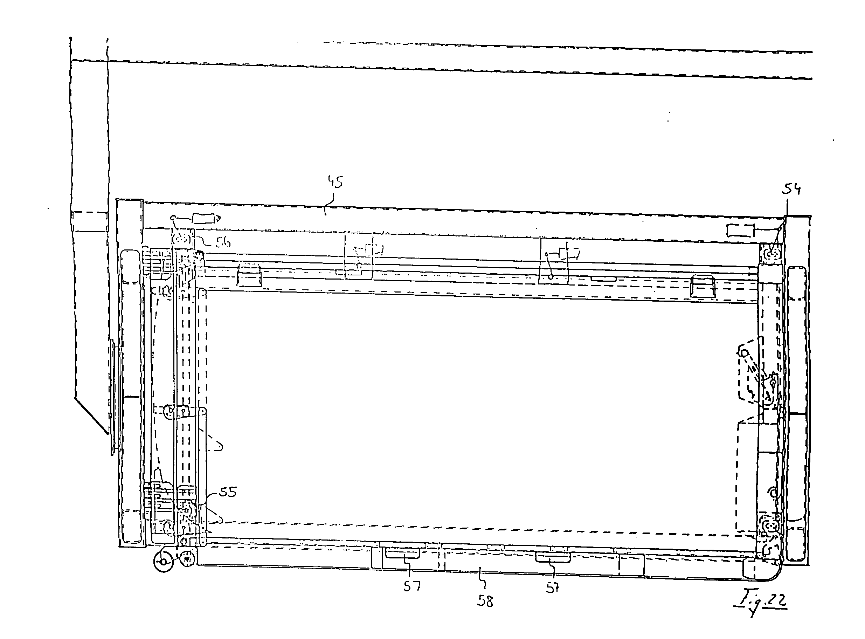

In den Figuren 12 bis 21 ist eine Weiterbildung des Behälters 1 dargestellt, bei der vor ein vorhandenes Frontportal 3, das den Eingriff eines Preßstempels ermöglicht, ein weiteres Portal 20 montiert werden kann, dessen Durchtrittsöffnung 21 eine von der Größe der Durchtrittsöffnung 5 des ersten Portals 3 abweichende Größe aufweist und somit als Adapter für eine Zuordnung des Behälters 1 zu einer Preßeinrichtung mit einer abweichenden Preßstempelgröße oder zu einer anderen Verriegelung an einer Presse, an die ein jeweiliger Behälter 1 anzusetzen ist, dient.

Um die Anmontage des vorzusetzenden Portals 20 zu ermöglichen, sind an dem stirnseitigen Behälterportal 3 im Bereich des oberen Profils 6a des Rahmens 6 Aufnahmen 22 vorgesehen, in die entsprechende Gegenaufnahmen 23 des vorgehängten Portals 20 eingehängt werden können. Beispielsweise können die Aufnahmen 22 als nach oben hin offene Lagerschalen ausgebildet sein, in die entsprechende Lagerachsen 23 des vorgesetzten Portals 20 eingreifen können. Dadurch kann die Montage des vorzusetzenden Adapterportals 20 einfach durchgeführt werden: Zunächst wird das Portal 20 über Abstützung in seinem Haltegriff 24, der beispielsweise von einem Traghaken untergriffen ist, an das Frontportal 3 des Behälters herangeführt (Fig. 12), dann durch Absenken in die am oberen Rahmenprofil 6 des Portals 3 angeordneten Aufnahmen 22 eingehängt (Fig. 13) und muß anschließend nur noch durch die eigene Gewichtskraft einwärts verschwenkt werden (Fig. 14), um in die Parallellage zum Frontportal 3 des Behälters 1 gelangen zu können.

Die beiden Portale 3,20 sind über zumindest ein zwischen diesen angeordnetes Dichtungselement, beispielsweise eine umlaufende Moosgummidichtung, gegeneinander abgedichtet. Durch das oben beschriebene Einschwenken des Portals 20 werden Scherkräfte auf die Dichtung bei der Montage und Demontage des Portals 20 vermieden. Die Dichtung ermöglicht einen hohen Preßdruck auf das einzubringende Gut, ohne daß dieses zwischen den Portalen 3,20 durchtreten könnte.

In Fig. 15 ist erkennbar, daß weitere Sicherungselemente, etwa am anzumontierenden Portal 20 schwenkbar gehaltene Greifhaken 25 und am Rahmen 6 des Behälterportals 3 angeordnete Widerlager 26, miteinander in Eingriff gelangen. Dieser Eingriff kann sowohl automatisiert als auch durch manuelle Beeinflussung vorgenommen werden. In jedem Fall halten in montierter Stellung die Portale 20 und 3 derart fest aneinander, daß auch bei Einbringung eines Preßdrucks in das im Behälterinnenraum 12 gehaltene Gut die Portale 20 und 3 in kontaktierender Parallelstellung verbleiben.

Damit der Behälter 1 auch mit vorgesetztem Portal 20 über Zugmittel auf einen LKW oder Anhänger gezogen werden kann, weist auch das vorgesetzte Portal 20 ein als Widerlager für ein hakenförmiges Zugglied dienenden sogenannten Kettenbock 27 auf, der in einer Aufnahmetasche 28 des Frontportals einschwenkbar aufgenommen ist. Er überragt damit den Behälter 1 in eingeschwenkter Stellung nicht nach unten.

Damit der Behälter 1 ohne das vorgesetzte Portal 20 entsprechend gezogen werden kann, weist das behälterseitige Portal 3 ebenfalls einen Kettenbock 29 auf, der in einer entsprechenden Tasche 30 des Portals 3 einschwenkbar ist.

In Verbindungsstellung der Portale 3 und 20 sind die beiden Kettenböcke 27 und 29 über ein Sicherungselement 31 miteinander starr verbunden (Fig. 19, 20) und überragen beide den Behälter 1 nicht nach unten.

Insbesondere bei neu angefertigten Behältern 1 ist es möglich, das Grundportal 3 von vorne herein durch einen Rahmen 6,6a zu ersetzen und in jedem Fall ein Frontportal 20 vorzuhängen, wobei dann das Frontportal 20 das einzige Portal zum Eingriff eines Preßtempels ist. Dieses kann dann je nach Anforderung variiert werden. Der Rahmen 6,6a dient dann nur zur Halterung des jeweils passenden vorgehängten Frontportals 20.

Sowohl das Grundportal 3 als auch das vorgesetzte Portal 20 können im oberen Bereich mit Corner fittings 41,42 versehen sein. Dann kann beispielsweise der Tragrahmen 45 dicht nebeneinander mehrere Eingriffszapfen aufweisen, die wahlweise entweder an dem Grundportal 3 oder an dem vorgesetzten Portal 20 angreifen, so daß sowohl Behälter 1 mit vorgesetztem als auch ohne vorgesetztes Portal 20 von dem Tragrahmen 45 in gleicher Weise gegriffen werden können. Alternativ ist es auch möglich, daß beispielsweise nur das Grundportal 3 bzw. der Rahmen 6 mit Corner fittings 41,42 versehen ist und stets diese vom Tragrahmen 45 gegriffen werden.

In den Fig. 12 a bis 17a ist beispielhaft dargestellt, daß auch lediglich das vorzusetzende Frontportal 20 mit oberen Befestigungsbeschlägen 41,42 versehen sein kann, ohne daß das Grundportal 3 derartige Corner fittings aufweist. Alternativ ist gemäß den Fig. 12b bis 17b die Version gezeigt, bei der Befestigungsbeschläge 41,42 sowohl jeweils dem Grundportal 3 als auch dem vorgesetzten Portal 20 zugeordnet sind.

Um auch solche Behälter händeln zu können, die entweder nur am Grundportal 3 (Fig. 12) oder nur am vorgesetzten Portal 20 (Fig. 12a) mit Corner fittings 41,42 versehen sind und bei denen deswegen der Längenabstand zu den hinteren Corner fittings 43,44 unterschiedlich ausgebildet sein kann, ist es neben der Anordnung von mehreren Zapfen nebeneinander am Tragrahmen 45 auch möglich, zumindest ein Zapfenpaar längenvariabel am Tragrahmen 45 anzuordnen, so daß es an diesem verschiebbar ist und deswegen an variierende Abstände der Corner fittings 41 und 43 bzw. 42 und 44 angepaßt werden kann.

In Fig. 12d ist ein vorzuhängendes Portal 20 dargestellt, das nicht von oben in seine endgültige parallel vor dem Grundportal 3 liegende Stellung einschwenkt, sondern um eine vertikale, seitliche Schwenkachse. Hierfür sind Aufnahmen 22d an seitlichen, vertikal aufragenden Holmen des Rahmens 6 vorgesehen, in denen entsprechende Schwenkscharniere 23d des Frontportals 20 halterbar sind. In Fig. 14d ist das Portal 20 in eingeschwenkter Parallelstellung vor dem Grundportal 3 dargestellt. wobei abweichend von Fig. 12d dort Befestigungsbeschläge 41,42 nur dem Grundportal 3 zugeordnet sind, wohingegen sie in Fig. 12d auch dem vorgesetzten Portal 20 zugeordnet sind. Dieses ist wie auch in den obigen Ausführungsbeispielen jeweils variabel. Auch eine Zuordnung von Befestigungsbeschlägen 41,42 nur zu dem vorgesetzten Portal 20 ist möglich.

In Fig. 14e ist ein weiteres Ausführungsbeispiel dargestellt, bei dem das Frontportal 20 parallel zur Erstreckung des Grundportals 3 gegenüber diesem abwärts verlagert und über ineinandergreifende Befestigungsmittel 25e,26e an diesem gesichert wird. Ein Verschwenken der Teile gegeneinander ist daher nicht unbedingt erforderlich. Das obere Ende des hineinragenden Schachts 21 ist, um die Parallelverlagerung der Teile 23 zueinander zu ermöglichen, ausgenommen. Auch hier ist eine Zuordnung der Befestigungsbeschläge 41,42 in unterschiedlicher Weise gemäß den obigen Beispielen möglich.

In Fig. 12c sind an Stelle der oberseitigen Befestigungsbeschläge 41,42 seitliche Befestigungsbeschläge 53,54 vorgesehen, die ebenfalls als genormte Corner fittings ausgebildet sind. Der Befestigungsbeschlag 54 kann dabei integraler Bestandteil des seitlich aufragenden Holms des Rahmens 6 sein. Auch hier ist eine wahlweise Zuordnung zu dem Portal 3 oder dem Portal 20 möglich. Durch die hier gezeigte Anordnung wird es möglich, mit einem Tragrahmen 45 seitlich an dem Behälter 1 anzugreifen, wie dies beispielsweise in dem folgenden Ausführungsbeispiel dargestellt ist:

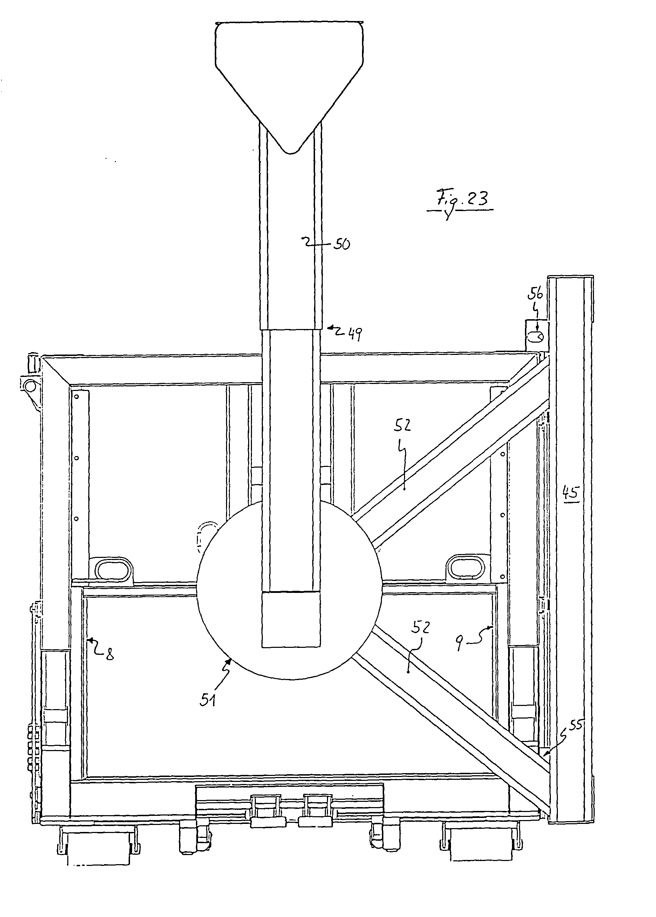

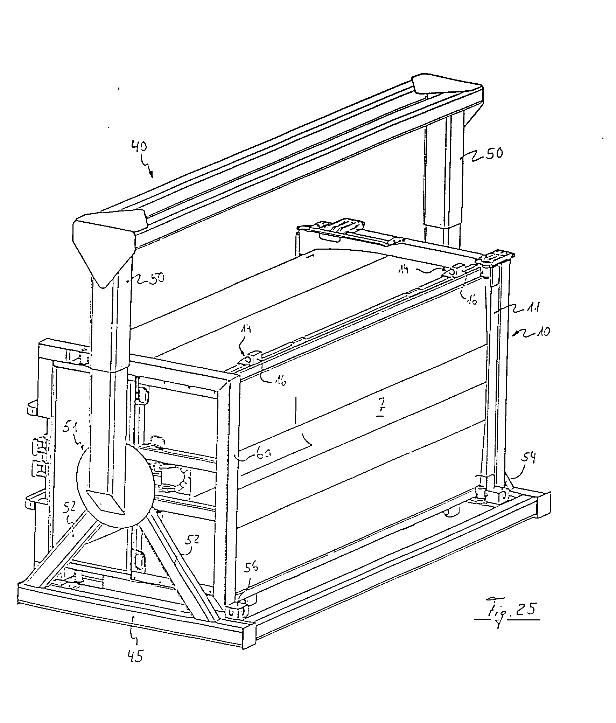

Gemäß dem in den Figuren 22 bis 28 dargestellten weiteren Ausführungsbeispiel ist die dortige Vorrichtung 40 prinzipiell gleichartig ausgebildet, greift jedoch seitlich an dem zu entleerenden Behälter 1 an. Der Behälter 1 weist hierfür entsprechend (Fig. 12c) an seinen oberen und unteren Seitenbereichen liegende Eckbeschläge 53,54,55,56 auf. Diese befinden sich daher nur an einer Seite des Behälters 1, und zwar dort im oberen und unteren Bereich.

Zusätzlich weist der Behälter 1 Eingriffsöffnungen 57 innerhalb eines oder mehrerer unterseitiger Längsträger 58 auf, wobei die Öffnungen 57 zum Eingriff einer Hubgabel, die mit dem Tragrahmen 45 in diesem Ausführungsbeispiel verbunden ist, vorgesehen ist. Somit ist dann die Verbindung des in Grundstellung vertikal stehenden Tragrahmens 45 und des Behälters 1 nicht allein über die Corner fittings 53,54,55,56 erreicht, sondern durch die eingreifende Hubgabel (nicht eingezeichnet) ergibt sich eine weitere Unterstützung für den gegriffenen Behälter 1.

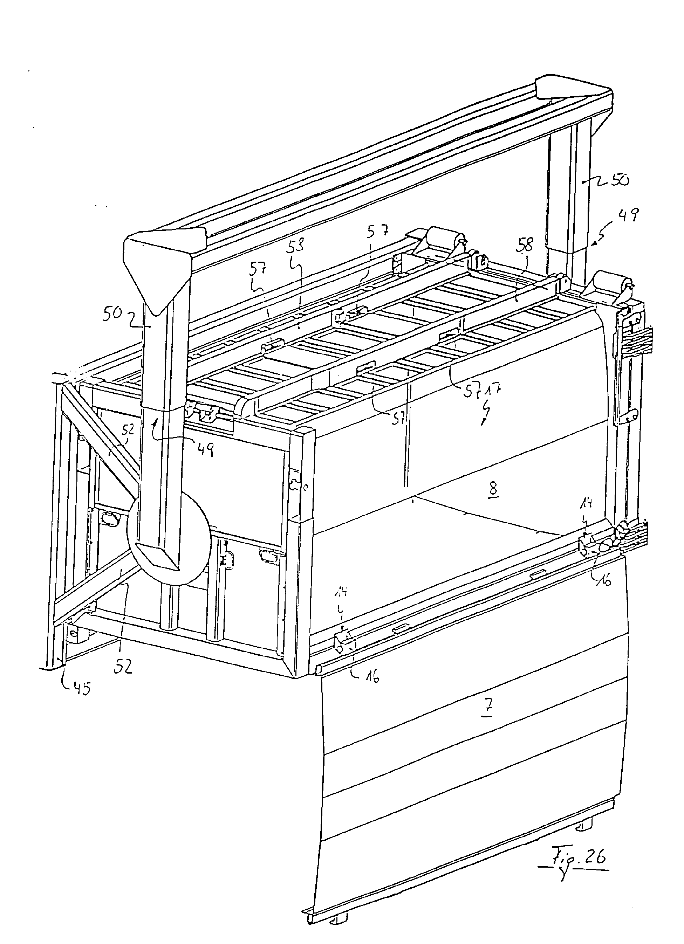

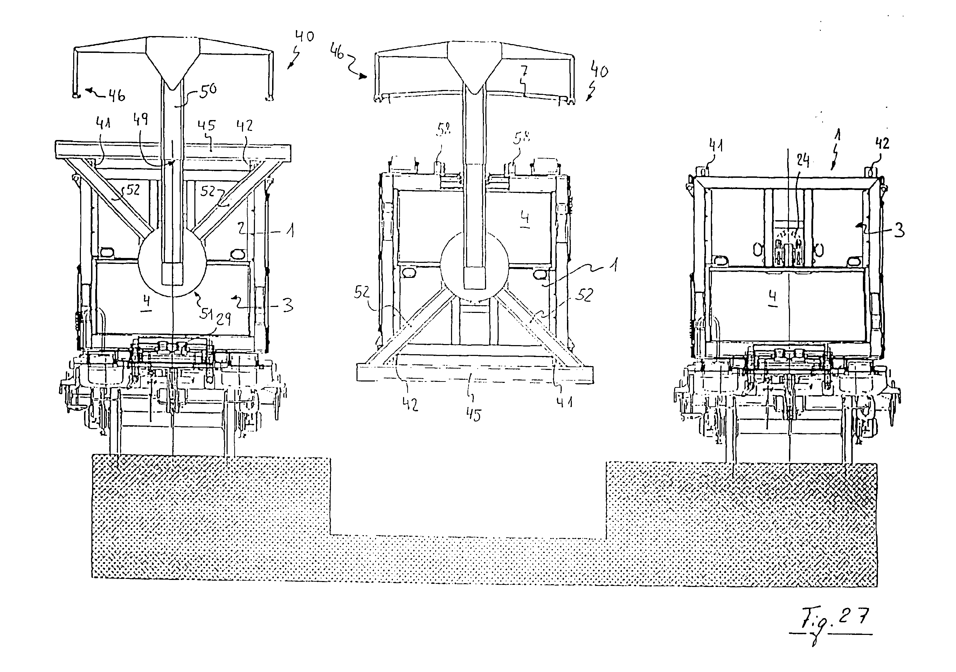

In dem gezeigten Ausführungsbeispiel ist keine Öffnungseinheit für den Deckel 7 vorhanden, sondern dieser öffnet allein durch seine Schwerkraft. Hierzu wird zunächst der Behälter von der Schwenkeinrichtung 51 um 90° verschwenkt, wobei der Tragrahmen 45 in eine unterhalb der Erstreckung des Behälters 1 liegende Ebene verlagert wird (Fig. 25). Gemäß Fig. 26 wird anschließend der Behälter 1 um weitere 90° verdreht, wobei der Deckel 7 durch seine Gewichtskraft in der vertikal abwärts ragenden Stellung gemäß Fig. 25 verbleibt. Die Aufnahmen 14,16 bilden dabei ein Schwenkscharnier aus, das im vorliegenden Ausführungsbeispiel nicht lösbar ist.

Eine Hubvorrichtung 49 ist hier entbehrlich, sofern der Schwenkarm des Deckels 7 auch ohne Relativbewegung der Teile zueinander nicht blockiert ist.

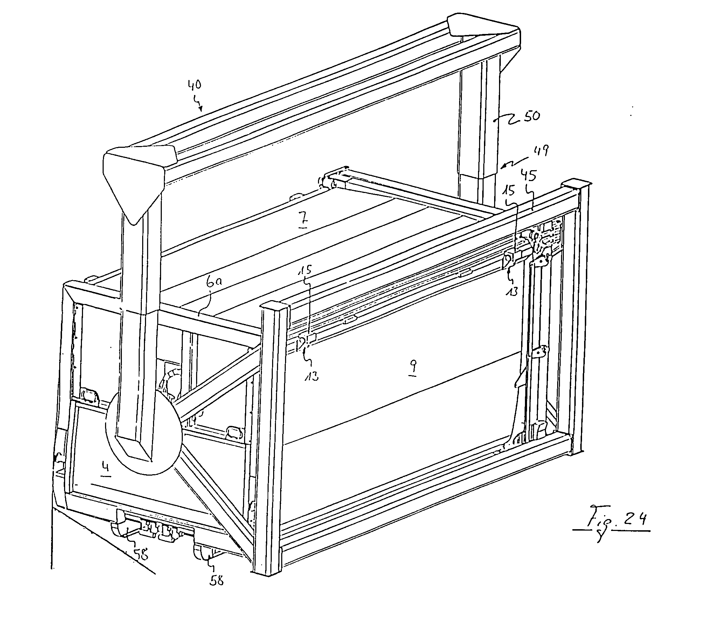

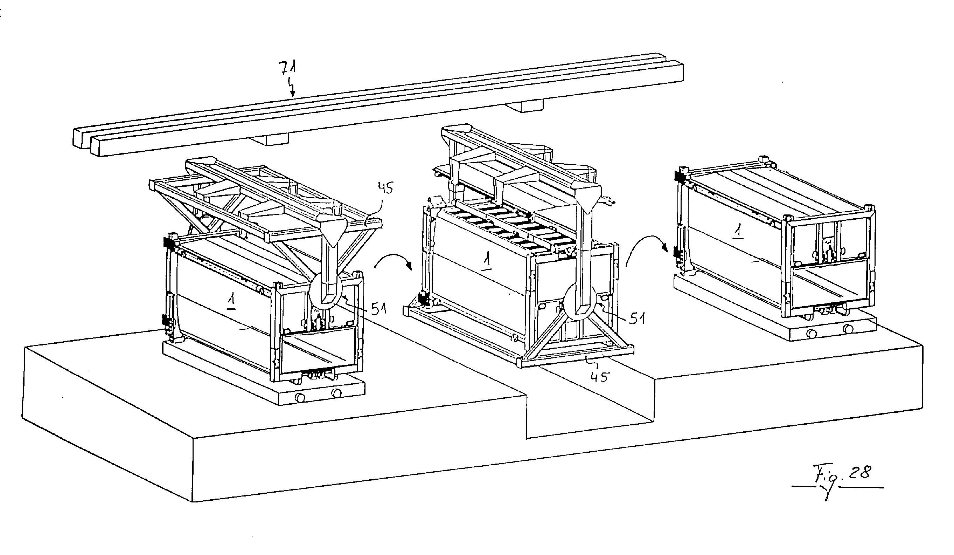

Nach Entleerung wird der Behälter gegensinnig wieder zurückgeschwenkt, wobei durch die Gewichtskraft des Deckels dieser automatisch wieder schließt. Es ergibt sich also auch beim Rückschwenken zunächst die in Fig. 23 gezeigte auf der Seite liegende Stellung des Behälters 1, bei der der Deckel 7 am Behälter 1 anliegt. Dabei kann der entleerte Behälter, wie in Fig. 27 dargestellt, auch auf einen parallelen Güterwagen oder LKW aufgesetzt werden, um somit innerhalb eines Zuges jeweils nur zu entleerende oder bereits entleerte Behälter zu haben, was die Handhabung vereinfacht.

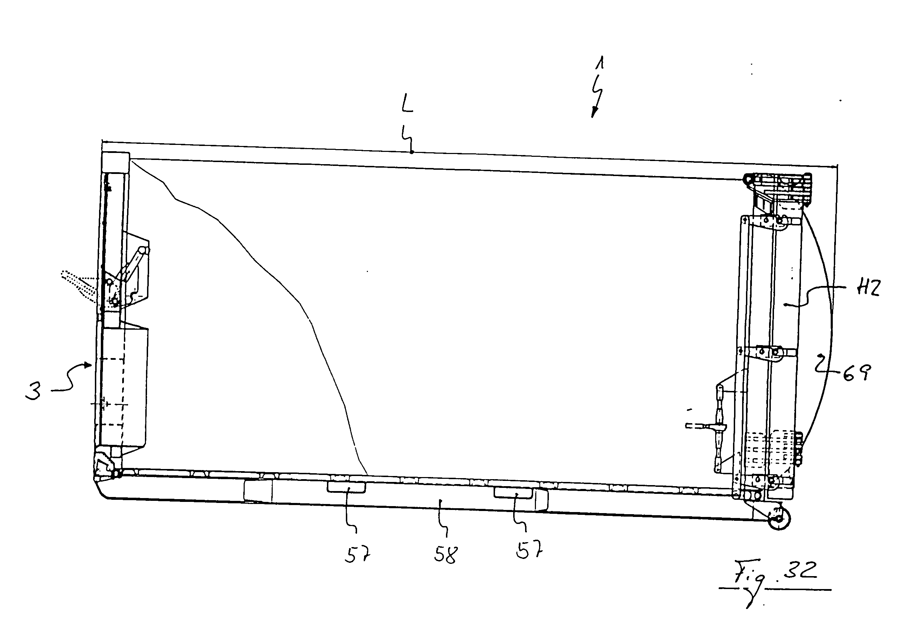

In den Fig. 31 und 32 wird deutlich, daß der Behälter 1 mit unterschiedlich ausgreifenden Hecktüren versehen sein kann, um insgesamt einen Längenausgleich zu schaffen und somit die Behälterlänge L unabhängig davon im wesentlichen konstant zu halten, ob ein Portal 20 vorgehängt ist oder der Behälter mit dem Frontportal 3 vorderseitig endet. Die Hecktür H1 ist hierfür abgeflacht ausgebildet, so daß sie eine relativ geringe Längenerstreckung aufweist. Ein bombierter Anteil 69, der zur Versteifung der Hecktür H1 dient, erstreckt sich innerhalb des von dieser gebildeten Rahmens. Gemäß Fig. 32 ist der bombierte Anteil 69 außerhalb der Hecktür H1, den Behälter 1 nach hinten überragend, ausgebildet. Hierdurch ergibt sich eine große Längenerstreckung im Heckbereich. Damit wird das gemäß Fig. 32 nicht vorgehängte Portal 20 in seiner Längenerstreckung nachgeahmt, so daß der dort gezeigte Behälter 1 im wesentlichen die gleiche Längserstreckung hat wie der in Fig. 31 gezeigte Behälter 1 mit dem vorgehängten Frontportal 20.

## Patentansprüche

1. Vorrichtung (40) zur Entleerung von im wesentlichen quaderförmigen Großbehältern (1), insbesondere Behältern für gepreßt zu entsorgende Reststoffe oder Wertstoffe, **dadurch gekennzeichnet, daß** die Vorrichtung eine Trageinheit (45) zum Anheben und Verlagern zumindest eines Behälters (1) und eine Schwenkeinheit (51) zum Ausleeren des oder der angehobenen Behälter(s) (1) umfaßt.

2. Vorrichtung nach Anspruch 1, **dadurch gekennzeichnet, daß** die Schwenkeinheit (51) mit der Trageinheit (45) verbunden und mit dieser anhebbar ist.

3. Vorrichtung nach einem der Ansprüche 1 oder 2, **dadurch gekennzeichnet, daß** die Trageinheit (45) starr mit dem Behälter (1) verbindbar ist.

4. Vorrichtung nach einem der Ansprüche 1 bis 3, **dadurch gekennzeichnet, daß** die Trageinheit (45) einen Tragrahmen umfaßt, der mit einem anzuhebenden Behälter (1) in Randbereichen verbindbar ist.

5. Vorrichtung nach Anspruch 4, **dadurch gekennzeichnet, daß** der Tragrahmen (45) insgesamt über die Schwenkeinrichtung (51) umwendbar ist.

6. Vorrichtung nach Anspruch 5, **dadurch gekennzeichnet, daß** der Tragrahmen (45) über seinen Eckbereichen zugeordnete und verdrehbare Zapfen mit dem Behälter (1) verbindbar ist.

7. Vorrichtung nach Anspruch 6, **dadurch gekennzeichnet, daß** die Zapfen nach Art von aus dem Containertransport bekannten Aufnahmezapfen ausgebildet sind.

8. Vorrichtung nach einem der Ansprüche 1 bis 7, **dadurch gekennzeichnet, daß** die Schwenkeinheit (51) eine virtuelle Schwenkachse umfaßt, die den aufgenommenen Behälter (1) im Bereich seiner vertikalen Längsmittelebene etwa auf halber Höhe durchdringt.

9. Vorrichtung nach einem der Ansprüche 4 bis 8, **dadurch gekennzeichnet, daß** die Vorrichtung eine erste Stützeinheit (50), die sich zwischen der Schwenkeinrichtung (51) und einem oberen Tragabschnitt der Vorrichtung (40) erstreckt, und eine zweite Stützeinheit (52) umfaßt, die sich zwischen der Schwenkachse und dem Tragrahmen (45) für den Behälter erstreckt.

10. Vorrichtung nach Anspruch 9, **dadurch gekennzeichnet, daß** die erste Stützeinheit (50) längenvariabel ist.

11. Vorrichtung nach einem der Ansprüche 9 oder 10, **dadurch gekennzeichnet, daß** die Vorrichtung (40) eine Über-Kopf-Lage der Trageinheit (45) ermöglicht.

12. Vorrichtung nach einem der Ansprüche 10 oder 11, **dadurch gekennzeichnet, daß** die zweite Stützeinheit (52) um die Schwenkachse um 360° verschwenkbar ist.

13. Vorrichtung (40) zur Aufnahme von Großbehältern (1), insbesondere Behältern für zu entsorgende Reststoffe oder Wertstoffe, insbesondere nach einem der Ansprüche 1 bis 12, **dadurch gekennzeichnet, daß** die Vorrichtung (40) eine Öffnungseinheit (46) zur Verschwenkung und/oder zur Abnahme und Halterung eines Behälterdeckels (7) umfaßt.

14. Vorrichtung nach Anspruch 13, **dadurch gekennzeichnet, daß** die Öffnungseinheit (46) zumindest einen Aufnahmearm (47;48) umfaßt, der zum Öffnen und/oder Verschwenken des Deckels (7) an einem Randbereich des Deckels (7) angreift.

15. Vorrichtung nach Anspruch 14, **dadurch gekennzeichnet, daß** der gegriffene Deckel (7) über eine Hubvorrichtung gegenüber dem Behälter (1) anhebbar oder verschwenkbar oder daß der Behälter (1) gegenüber dem so aufgenommenen Deckel (7) über eine Hubvorrichtung (49) absenkbar ist.

16. Behälter (1) zur Aufnahme von zu entsorgenden Reststoffen, Wertstoffen oder dergleichen, **dadurch gekennzeichnet, daß** der Behälter (1) in oberen Randbereichen Tragaufnahmen (41,42,43,44;53,54,55,56) aufweist und einen öffnungsfähigen Deckel (7) umfaßt, der sich in geschlossener Stellung derart erstreckt, daß er die Zugänglichkeit der Tragaufnahmen (41,42,43,44;53,54,55,56) frei beläßt.

17. Behälter nach Anspruch 16, **dadurch gekennzeichnet, daß** die Tragaufnahmen (41,42,43,44;53,54,55,56) entsprechend den im Containerbereich genormten sogenannten Corner fittings ausgebildet und an Rahmenprofilen (6;11) des Behälters (1) angeordnet sind.

18. Behälter nach einem der Ansprüche 16 oder 17, **dadurch gekennzeichnet, daß** der Deckel (7) vollständig abnehmbar ist.

19. Behälter nach einem der Ansprüche 16 bis 18, **dadurch gekennzeichnet, daß** der Deckel (7) entlang einer Längsseite (8;9) des Behälters (1) schwenkbar halterbar ist.

20. Behälter nach Anspruch 19, **dadurch gekennzeichnet, daß** die Halteseite (8;9) des Deckels (7) wahlweise einstellbar ist.

21. Behälter nach einem der Ansprüche 18 bis 20, **dadurch gekennzeichnet, daß** der Deckel (7) in geschlossener Stellung über zumindest eine Sicherung an dem Behälter (1) halterbar ist und das oder die Sicherung(en) über eine Fremdbetätigung, etwa durch eine Tragvorrichtung (40), außer Eingriff verbringbar sind.

22. Behälter nach einem der Ansprüche 16 bis 21, **dadurch gekennzeichnet, daß** dieser nach unten hin zumindest bereichsweise (17;18) verjüngende Wandungen (8;9) aufweist.

23. Behälter nach einem der Ansprüche 16 bis 22, **dadurch gekennzeichnet, daß** dieser zumindest einseitig eine verschließbare Öffnung (4) zur Kraftbeaufschlagung des im Behälter (1) enthaltenen Gutes mittels eines Preßstempels aufweist.

24. Behälter nach einem der Ansprüche 1 bis 23, **dadurch gekennzeichnet, daß** dieser zumindest einen bodenseitigen Längsträger (58) umfaßt, der mit Eingriffsöffnungen (57) für ein Hubwerkzeug versehen ist.
